# EUROPEAN PATENT APPLICATION

(11) **EP 1 501 214 A1**
(43) Date of publication of application: **26.01.2005**
(21) Application number: 03717620.3
(22) Date of filing: 17.04.2003
(51) Int. Cl.: H04B 7/26

(54) **MOBILE COMMUNICATION SYSTEM**

(30) Priority: 25.04.2002 JP 2002123353
(71) Applicant: NEC Corporation, Minato-ku, Tokyo 108-8001 (JP)
(72) Inventor: NOMA, Satoshi, NEC Corporation, Minato-ku, Tokyo 108-8001 (JP)
(74) Representative: Glawe, Delfs, Moll & Partner
(86) International application number: PCT/JP2003/004881
(87) International publication number: WO 2003/092187

(57) **Abstract**

In a system where a plurality of position registration methods are used, edge nodes (310, 320) or higher order communication nodes convert, if necessary, position registration signals from mobile terminals (110, 120) and perform position registrations in accordance with connected networks (201, 202). Alternatively, the mobile terminals, the edge nodes or the like automatically select and use appropriate position registration methods in accordance with usages or conditions of the mobile terminals, such as the types of applications utilized by the mobile terminals.

## Description

### TECHNICAL FIELD

The present invention relates to a mobile communication system which is operable on a mixture of position registering processes, e.g., which has networks each supporting a micromobility or macromobility or a network supporting both micromobility and macromobility.

### BACKGROUND ART

Individual mobile communication systems employ respective position registering processes that are specific to certain radio accessing systems (e.g., a PHS system, a PDC system, a W-CDMA system, etc.). Networks according to different communication control processes (radio communication processes) have their own features. For example, a cellular telephone network is advantageous in that it allows users to communicate even while in high-speed motion and provides a wide service area, but is disadvantageous in that usage fees are high. The PHS network is advantageous in that usage fees are low and it is capable of high-speed data transmission and hence is suitable for multimedia communications, but is disadvantageous in that the service is not available in cars while in high-speed motion.

A mobile terminal is usually compatible with a certain communication control process, and can be used within the service area covered by a base station according to that communication control process. When the mobile terminal is located in the service area of an edge node (base station) according to another position registering process, the mobile terminal cannot use the network of the other position registering process. Generally, a mobile terminal compatible with a particular position registering process can be used only in the network of that particular position registering process.

It is preferable to make a mobile terminal compatible with a plurality of different communication control processes so that the mobile terminal can be utilized according to those communication control processes. Mobile terminals that can singly be used in a plurality of networks have been put to use. The user of such a mobile terminal selects or designates and uses a communication control process/network depending on the service area in which it is located or the purpose for which it is used. For the user to use the mobile terminal in reality, the user needs to perform a position registering process for indicating the current position of the mobile terminal to the network.

A technology for processing a position registration request from a mobile terminal in communications through mobile communication networks based on different mobile communication processes is disclosed in Japanese laid-open patent publication No. 11-341545, for example. According to the disclosed technology, when a GSM network and a PHS network receive a position registration request from a mobile terminal, each of the networks registers the position of the mobile terminal in its own network, and requests the other communication network to register the position of the mobile terminal, after which the requested communication network registers the position of the mobile terminal. In this manner, the frequency of position registration requests from mobile terminals is reduced for saving electric power.

Japanese laid-open patent publication No. 8-265835 discloses a technology for allowing mobile terminals, which are used in a system having a mixture of mobile communication networks based on different mobile communication processes and are capable of selecting the different radio communication processes in an area where the mobile communication networks are present, to share control information for controlling positional registrations, outgoing calls, incoming calls, base station identifications, and other communications, by having areas according to the different mobile communication processes complement each other. The disclosed technology can efficiency operate the radio area where the different radio communication processes are present for lowering the loss probability, and can reduce the amount of positional information that is required by a positional information database.

It is convenient for a mobile terminal to automatically select and connect to an optimum one of available networks even if the user of the mobile terminal is unaware of the information of the networks that are connected to the communication control unit. For example, Japanese laid-open patent publication No. 10-327463 (portable information mobile terminal) reveals a technology for eliminating drawbacks which make the user feel awkward when buttons need to be operated for a multimode communication mobile terminal having a plurality communication functions to switch to a desired communication function. To solve the above problems, the above publication discloses a portable information mobile terminal having a plurality of radio communication means such as cellular phone and PHS and operable for determining a priority level based on the fee and/or contents to be sent and received using the radio communication means and using either one of the radio communication means according to the determined priority level.

A major service provided by a mobile communication system typified by cellular phone is to use the system as a telephone system. In addition, a short message service based on data communications in the mobile communication system is also in widespread use. Technologies about the short message service are disclosed in Japanese laid-open patent publication No. 2001-16632, for example. At present, it is possible for a single mobile terminal to connect to an IP network such as an intraoffice LAN or the Internet. Thus, even a single mobile communication system (network) can use a mixture of communication control processes.

There are roughly two types of processes of carrying data to a mobile terminal that is moving in a mobile communication system. There are also two types of position registration processes of indicating a destination via the network to which a mobile terminal carries data to the network. These types of position registration processes are a position registration process (micromobility) suitable for mobile terminals that move in a small area and a position registration process (macromobility) suitable for mobile terminals that move in a large area.

Micromobility is advantageous in that a delay in until the arrival of the time when data is arrived which is sent and received is small, but is disadvantageous in that using micromobility in a wide area poses requires a large load on the network. On the other hand, Macromobility is advantageous in that it reduces the load on the network for data communications, but is disadvantageous in that using macromobility in a wide area results in a large data delay time.

The position registration processes have their own features with respect to their function and performance. For example, with respect to packet communications, one example of a position registration process which is capable of high-speed packet communications, but is not scalable, is Cellular IP. According to Cellular IP, the routine table is updated each time a position registration signal is issued. Therefore, Cellular IP is advantageous in that it can handle mobile terminals which move frequently, but is disadvantageous in that it is not scalable.

An example of a position registration process which is difficult to perform high-speed packet communications, but is scalable, is Mobile IP. According to Mobile IP, a packet which come from other network is encapsulated in home network which mobile terminal belong originally and the address of a node the mobile terminal which the mobile terminal already register through which the packet is to travel is added to the header for delivering the packet to a mobile terminal at a destination of encapsulated packet in the home network. Mobile IP is advantageous in that it is scalable, but is disadvantageous in that it fails to handle mobile terminals which move frequently.

Conventional technologies of Mobile IP are disclosed in Japanese laid-open patent publication No. 11-355281, Japanese laid-open patent publication No. 11-88433, Japanese laid-open patent publication No. 2000-224233, and Japanese laid-open patent publication No. 2001-274834. Japanese laid-open patent publication No. 2001-197558 and Japanese laid-open patent publication No. 2001-224070 also deal with Mobile IP technologies. Mobile IP itself is well known in the art, and will not be described below.

If, in a situation where a plurality of position registration processes are available in the network, a single mobile terminal that is compatible with only one of the position registration processes can use a plurality of mutually available networks, then such a network mobile terminal is highly preferable and desirable for realization. In this case, it is preferable that an optimum position registration process is selected depending on the purpose for which the mobile terminal is used, without the user being aware of a plurality of position registration processes. It is a first object of the present invention to newly propose such a technology.

On a conventional mobile terminal, a prescribed application depending on the purpose for which it is used is activated in response to an outgoing call or an incoming call, and communications are performed using a prescribed position registration process. A higher-rank node like MSC/SGSN in W-CDMA system or HTTP server in the internet, which communicates with the mobile terminal processes communications according to a predetermined position registration process. The conventional position registration process, however, may not necessarily be optimum depending on the network situation. For example, though it is necessary to use Cellular IP for highly real-time communications such as telephone and large-capacity data communications, Mobile IP is sufficient for the transfer of small-capacity data which tolerates a delay, such as a short message, and mobile terminals which move at low speeds as Mobile IP poses no load on the network.

Therefore, for packet communications in a network that is operable on a mixture of position registering processes, it is preferable to use a more optimum position registration process different from a prescribed position registration process to reduce the load on the network. In this case, it is preferable that to select an optimum position registration process be selected depending on the purpose for which the mobile terminal is used, without the user being aware of a plurality of position registration processes. It is a second object of the present invention to newly propose such a technology.

### DISCLOSURE OF THE INVENTION

The present invention has been made in view of the above situation in a network environment having a mixture of position registering processes. It is a task of the present invention to provide a user-friendly mobile communication system which allows the user of a mobile terminal to register its position and receive packets in a network environment having a mixture of position registering processes, without the user being aware of such position registering processes.

Another task of the present invention is to provide a mobile communication system which, in a network environment having a mixture of position registering processes, can automatically select and use an appropriate position registration process depending on the manner and situation in which a mobile terminal is used, e.g., the type of an application used by the mobile terminal, without the user of the mobile terminal being aware of the position registration process, thereby reducing the load on the network.

To accomplish the above tasks, a mobile communication system according to the present invention comprises a mobile terminal A compatible with at least a first position registration process, a plurality of edge nodes C connected to the mobile terminal A through a radio link and compatible with the first position registration process and a second position registration process, a network A connected to the edge nodes C and compatible with the first position registration process, and a network B connected to another the edge node C and compatible with the second position registration process, wherein the edge node C connected to the network B is responsive to the reception of a position registration signal from the mobile terminal A for converting the position registration signal into a signal according to the second position registration process and performing a position registration of the mobile terminal A.

To accomplish the above tasks, a mobile communication system according to the present invention comprises a mobile terminal A compatible with at least a first position registration process, a plurality of edge nodes A connected to the mobile terminal A through a radio link, a network A connected to the edge nodes A and compatible with the first position registration process, a plurality of edge nodes C connected to the mobile terminal A through a radio link and compatible with the first position registration process and a second position registration process, a communication node C connected to the edge nodes C and compatible with the first position registration process and the second position registration process, and a network B connected to the communication node C and compatible with the second position registration process, wherein the communication node C connected to the network B is responsive to the reception of a position registration signal from the mobile terminal A for converting the position registration signal into a signal according to the second position registration process and performing a position registration of the mobile terminal A.

The first position registration process may comprise a position registration process of a W-CDMA system, and the second position registration process comprises Mobile IP.

To accomplish the above tasks, a mobile communication system according to the present invention comprises a mobile terminal C compatible with a first position registration process and a second position registration process, a plurality of edge nodes N connected to the mobile terminal C through a radio link and compatible with the first position registration process and the second position registration process, and a network M connected to the edge nodes N and compatible with the first position registration process and the second position registration process, wherein the edge nodes N receive a position registration signal sent by the mobile terminal C and based on the first position registration process or the second position registration process, and performs a position registration of the mobile terminal C based on either the first position registration process or the second position registration process depending on a predetermined condition.

To accomplish the above tasks, a mobile communication system according to the present invention comprises a mobile terminal C compatible with a first position registration process and a second position registration process, a plurality of edge nodes N connected to the mobile terminal C through a radio link and compatible with the first position registration process and the second position registration process, a communication node N connected to the edge nodes N and compatible with the first position registration process and the second position registration process, and a network M connected to the communication node N and compatible with the first position registration process and the second position registration process, wherein the communication node N receives a position registration signal sent by the mobile terminal C and based on the first position registration process or the second position registration process, and performs a position registration of the mobile terminal C based on either the first position registration process or the second position registration process depending on a predetermined condition.

To accomplish the above tasks, a mobile communication system according to the present invention comprises a mobile terminal M compatible with a first position registration process and a second position registration process, a plurality of edge nodes M connected to the mobile terminal M through a radio link and compatible with the first position registration process and the second position registration process, and a network M connected to the edge nodes M and compatible with the first position registration process and the second position registration process, wherein the mobile terminal M sends a position registration signal based on either the first position registration process or the second position registration process depending on a predetermined condition.

The predetermined condition may comprise the type of an application used by the mobile terminal.

The type of an application used by the mobile terminal may be piggybacked on the position registration signal.

The predetermined condition may comprise a predetermined priority level of the mobile terminal.

The predetermined condition may comprise the magnitude of a moving speed which can be used by the mobile terminal.

The first position registration process may comprise Cellular IP, and the second position registration process may comprise Mobile IP.

Mobile IP may be selected as the position registration processes if the type of an application used by the mobile terminal represents small-capacity packet communications, and Cellular IP may be selected as the position registration processes if the type of an application used by the mobile terminal represents high-speed packet communications.

With the mobile communication system according to the present invention, the user of the mobile terminal does not need to be aware of which network uses which position registration process. The mobile communication system is thus user-friendly.

With the mobile communication system according to the present invention, the mobile terminal or the network automatically selects and uses an appropriate position registration process depending on the manner and situation in which the mobile terminal is used, e.g., the type of an application used by the mobile terminal. Therefore, the load on the network can be reduced without the user being aware of the position registration process.

If a position registration process is determined in conformity with an application used by the mobile terminal, then in addition to the above advantages, a service based on a position registration process compatible with high-speed packet communications which pose a load on the network does not need to be provided to a mobile terminal that does not use high-speed packet communications. Consequently, the usage efficiency of the network is increased.

### BRIEF DESCRIPTION OF THE DRAWINGS

Fig. 1 is a view showing major related components of a mobile communication system according to a first embodiment of the present invention;
Fig. 2 is a block diagram of the arrangement of an edge node in the mobile communication system according to the first embodiment;
Fig. 3 is a flowchart of a position registration process in the edge node in the mobile communication system according to the first embodiment;
Fig. 4 is a view showing major related components of a mobile communication system according to a second embodiment of the present invention;
Fig. 5 is a block diagram of the arrangement of an edge node in the mobile communication system according to the second embodiment;
Fig. 6 is a flowchart of a position registration process in the edge node in the mobile communication system according to the second embodiment;
Fig. 7 is a view showing major related components of a mobile communication system according to a third embodiment of the present invention; and
Fig. 8 is a block diagram of the arrangement of an edge node in the mobile communication system according to the third embodiment.

### BEST MODE FOR CARRYING OUT THE INVENTION

As described above, there are position registering processes that are specific to certain radio accessing systems (e.g., a PHS system, a PDC system, a W-CDMA system, etc.). According to the present invention, an edge node of a network plays a role as a gateway for performing conversion between those position registering processes. According to the present invention, an edge node also plays a role as a gateway for performing conversion from a position registration process specific to a radio accessing system into a position registration process specific to the Internet.

According to the present invention, furthermore, an edge node selects a position registration process depending on an application used by a mobile terminal, e.g., a short message service (the amount of data communications: small) or high-speed data communications (the amount of data communications: large), and converts the position registration process if necessary. It is assumed naturally that the network supports at least two position registration processes used by the mobile terminal. Alternatively, the mobile terminal itself automatically selects a position registration process depending on the application and converts the position registration process if necessary.

### [1st Embodiment]

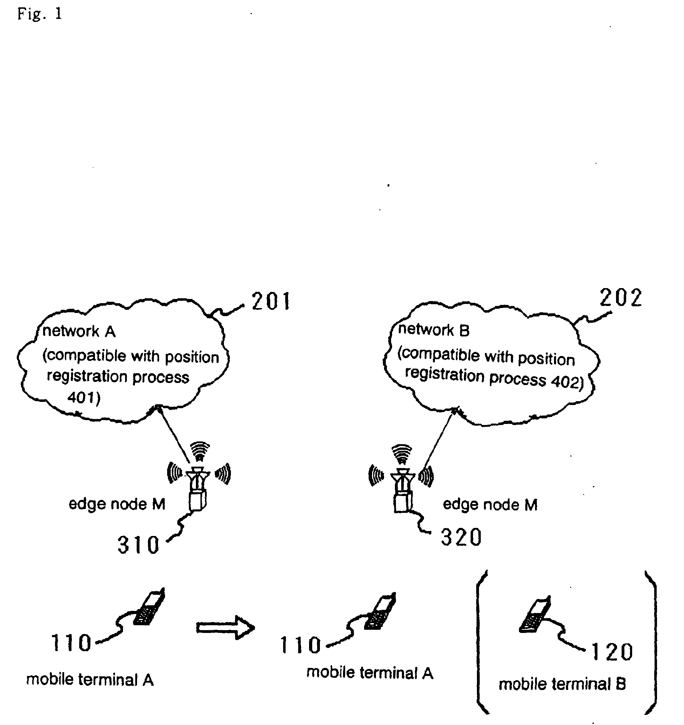

The present invention will be described below successively with respect to embodiments with reference to the drawings. Fig. 1 is a view showing major related components of a mobile communication system according to a first embodiment of the present invention. According to this embodiment, a position registration process is converted, e.g., between Mobile IP and W-CDMA. In the present embodiment, even when a mobile terminal enters an area having a different position registration process, the user of the mobile terminal does not need to be aware of the different position registration process.

As shown in Fig. 1, the system according to the present invention comprises mobile terminal A: 110, mobile terminal B: 120, network A: 201, edge node M: 310 connected to network A: 201, network B: 202, and edge node M: 320 connected to network B: 202. In the present description, mobile terminals, edge nodes, and networks of different types are indicated by different alphabetical letters, e.g., mobile terminal A, mobile terminal B, etc. Though many other edge nodes are connected to the networks, they are omitted from illustration. Some systems are configured such that each edge node is connected to a network through an appropriate control node (not shown).

Mobile terminal A: 110 is compatible with only first position registration process 401, and mobile terminal B: 120 is compatible with only second position registration process 402. Network A: 201 is compatible with only first position registration process 401, and network B: 202 is compatible with only second position registration process 402. Edge node M: 320 is matched to second position registration process 402, but is arranged so as to be able to send signals to and receive signals from mobile terminal A: 110 based on first position registration process 401.

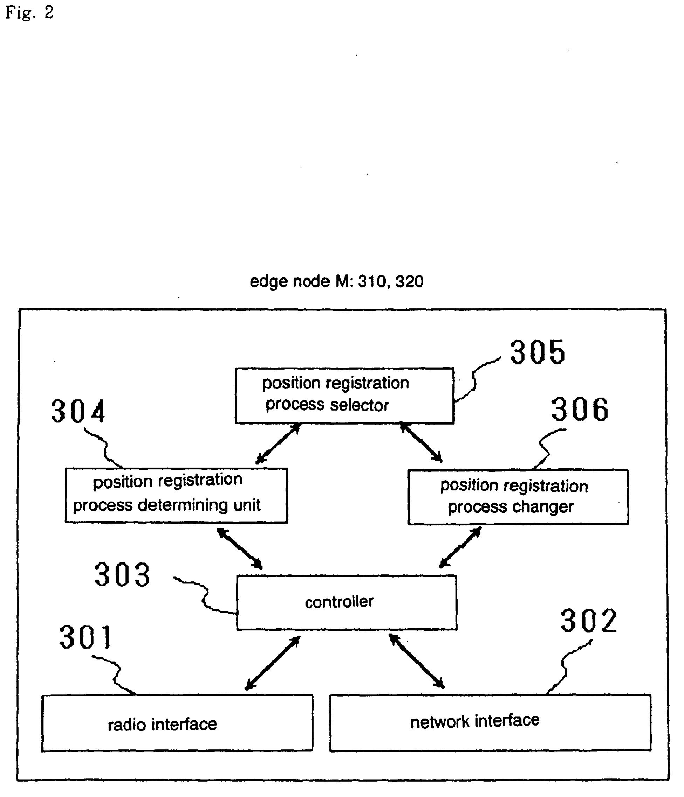

As shown in Fig. 2, each of edge nodes M: 310, 320 comprises radio interface 301, network interface 302, controller 303, position registration process determining unit 304, position registration process selector 305, and position registration process changer 306. Radio interface 305 terminates radio communications. Network interface 302 provides interfacing with networks 201, 202. Position registration process determining unit 304 is a functional unit for recognizing a position registration signal among signals that have traveled through radio interface 301 and network interface 302, and recognizing a process with regard to the position registration of the signal. Position registration process selector 305 is a functional unit for selecting a position registration process which is in conformity with the position registration process supported by network 202, or an appropriate position registration process. Position registration process changer 306 has a function to change position registration processes when the position registration process determined by position registration process selector 305 is different from the position registration process of a signal transmitted from an external source. Controller 303 controls the functions of edge node 320.

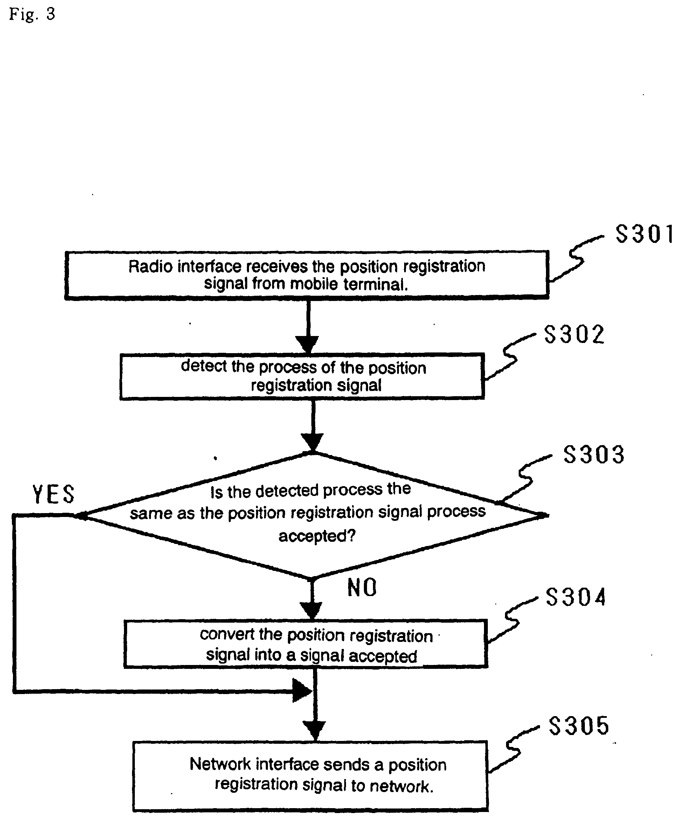

Operation of the above embodiment will be described below with reference to a flowchart shown in Fig. 3 which illustrates a position registration process at edge node M. Mobile terminal A: 110 that is located in the area of edge node M: 310 of network A: 201 sends a position registration signal to network A: 201. It is assumed that this signal is compatible with first position registration process 401.

Edge node M: 310 receives the position registration signal (S301). Edge node M: 310 detects the process of the position registration signal (S302), and determines whether the detected process is the same as the position registration signal process accepted by edge node M: 310 (position registration process 401 of network A: 201) or not (S303). In this example, since the position registration signal is of the same process as position registration process 401 of network A: 201 (S303: YES), edge node M: 310 processes a position registration based on position registration process 401. Specifically, network interface 320 sends a position registration signal to network A: 201 (S305). In a W-CDMA system, for example, the position registration signal is sent to an HLR (Home Location Register), not shown, which is a database for managing subscribers to the mobile communication system, and its position registration information is managed. Subsequently, mobile terminal A: 110 can transmit packets to a desired companion mobile terminal based on position registration process 401. Communications to this mobile terminal arrive from network A: 201 through edge node 310.

When edge node M: 310 receives a position registration signal other than position registration process 401 of network A: 201 (decision step S303: NO), edge node M: 310 converts the position registration signal into a signal according to a process which is the same as position registration process 200 of network 100 (S304), and sends the signal (S305).

Thereafter, it is assumed that same mobile terminal A: 110 moves into an area of edge node M: 320 of network B: 202 (position registration process 402) which does not match the position registration process. In this case, as shown in Fig. 3, a position registration signal transmitted from mobile terminal A: 110 is received by edge node M: 320 (S301). Edge node M: 320 detects that the signal is a signal based on position registration process 401 (S302), and determines whether the detected process is the same as position registration process 402 of network B: 202 or not (S303).

In this case, since the position registration signal is according to a process which is different from position registration process 402 of network B: 202 (S303: NO), edge node M: 320 converts the signal into a signal matching position registration process 402 of network B: 202 (S304), and sends a position registration signal from network interface 302 to network B: 202 (S305). In a W-CDMA system, for example, the registration information is sent to the HLR (not shown) and updated and managed. In this manner, edge node M: 320 processes a position registration of mobile terminal A: 110 based on position registration process 402. Subsequently, mobile terminal A: 110 can freely perform packet communications with a desired companion mobile terminal.

In the above description, mobile terminal A: 110 compatible with only first position registration process 401 has been described above. However, mobile terminal B: 120 compatible with only second position registration process 402 also operates in the same manner and offers the same advantages as described above. Packets can be sent and received without the user being aware of which network uses which position registration process in cases including a case where mobile terminal B: 120 moves into the area of network A compatible with only first position registration process 401.

A mobile terminal may be compatible with two position registration processes 401, 402. The mobile communication system is advantageous in that such a mobile terminal does not need to be instantaneously aware of when it moves into an area having a different position registration process.

In the system according to the embodiment, an edge node compatible with only position registration process 401 may be connected to network A: 201, and an edge node compatible with only position registration process 402 may be connected to network B: 202. However, such edge nodes are omitted from illustration.

According to the first embodiment, as described above, a mobile terminal can be used through a network compatible with a different position registration process for utilizing network resources. In a position registration procedure, the user of a mobile terminal can send and receive packets without being aware of which network uses which position registration process. The mobile communication system is thus user-friendly and is highly convenient for the user. The present invention is not limited to use between Mobile IP and W-CDMA, but is applicable regardless any particular position registration processes.

Moreover, according to the first embodiment, each edge node converts a position registration process when necessary. According to the present invention, an edge node may not have a conversion function, but the same process as describe above may be performed on a position registration signal that is transferred from an edge node at a higher-rank communication node connected to the edge node. Such an arrangement offers the same advantages.

### [2nd Embodiment]

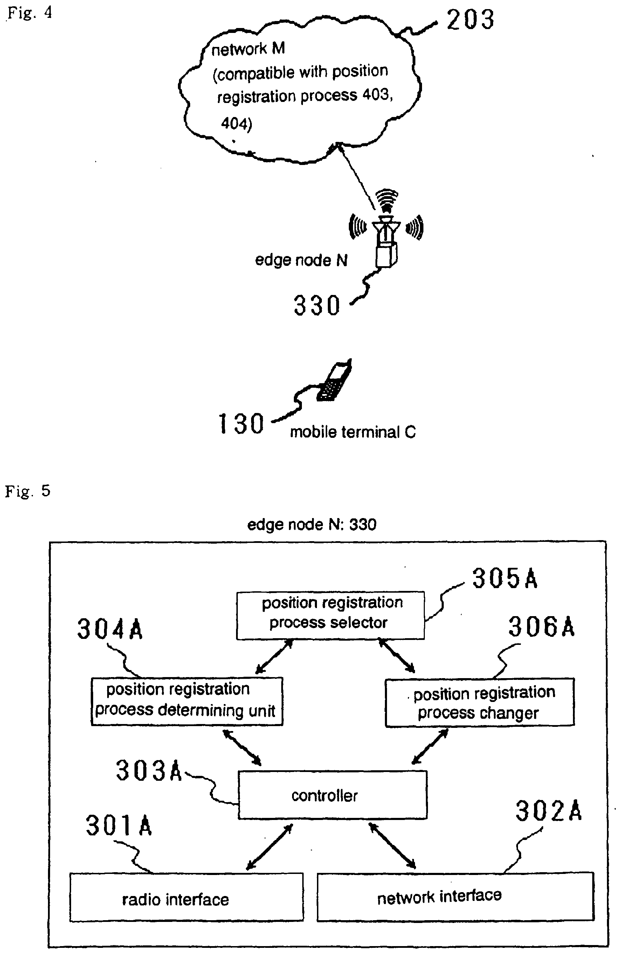

A second embodiment will be described below with reference to the drawings. Fig. 4 is a view showing major related components of a mobile communication system according to a second embodiment of the present invention. As shown in Fig. 4, the system according to the embodiment comprises mobile terminal C: 130, single network M: 202, and edge node N: 330.

Network M: 203 is compatible with both first position registration process 403 and second position registration process 404. First position registration process 403 is a process which is scalable, but is not suitable for packet transmission to a mobile terminal which moves at high speed or which performs high-speed data communications. For example, a position registration process which depends upon a data transmission system, such as Mobile IP, for assigning a header to data and carrying the data to a location where a mobile terminal is present, corresponds to such a process. Second position registration process 404 is a process which is not scalable, but is suitable for packet transmission to a mobile terminal which moves at high speed or which performs high-speed data communications. For example, a position registration process which depends upon a system, such as Cellular IP, for updating a table (routing table) indicative of a data destination which an intermediary node has, and transmitting data to a location where a mobile terminal is present, corresponds to such a process.

Edge node N: 330 according to the present embodiment has a function to determine and select which of position registration processes 403, 404 is to be used for processing, based on the type of an application used by mobile terminal C: 130, and communicates with a higher-rank node like MSC/SGSN in W-CDMA or HTTP server in the internet (not shown) based on the selected position registration process.

Edge node N: 330 is shown in block form in Fig. 5. Edge node N: 330 has an arrangement similar to the edge node shown in Fig. 2, and comprises radio interface 301 A, network interface 302A, controller 303A, position registration process determining unit 304A, position registration process selector 305A, and position registration process changer 306A. Radio interface 301 A terminates radio communications. Network interface 302A provides interfacing with network M: 203. Position registration process determining unit 304A is a functional unit for recognizing a position registration signal among signals that have traveled through radio interface 301 A and network interface 302A, and recognizing a process with regard to the position registration of the signal.

Position registration process selector 305A is a functional unit for selecting an appropriate position registration process depending on an application used by mobile terminal C: 130, from among position registration processes that are supported by network M: 203. Position registration process changer 306A has a function to change position registration processes when the position registration process determined by position registration process selector 305A is different from the position registration process of a signal transmitted from an external source. Controller 303A controls the functions of edge node N: 330.

Mobile terminal C: 130 according to the present embodiment may be of an ordinary arrangement, and may have either position registration process 403 or 404 installed, or may have both position registration processes 403, 404 installed.

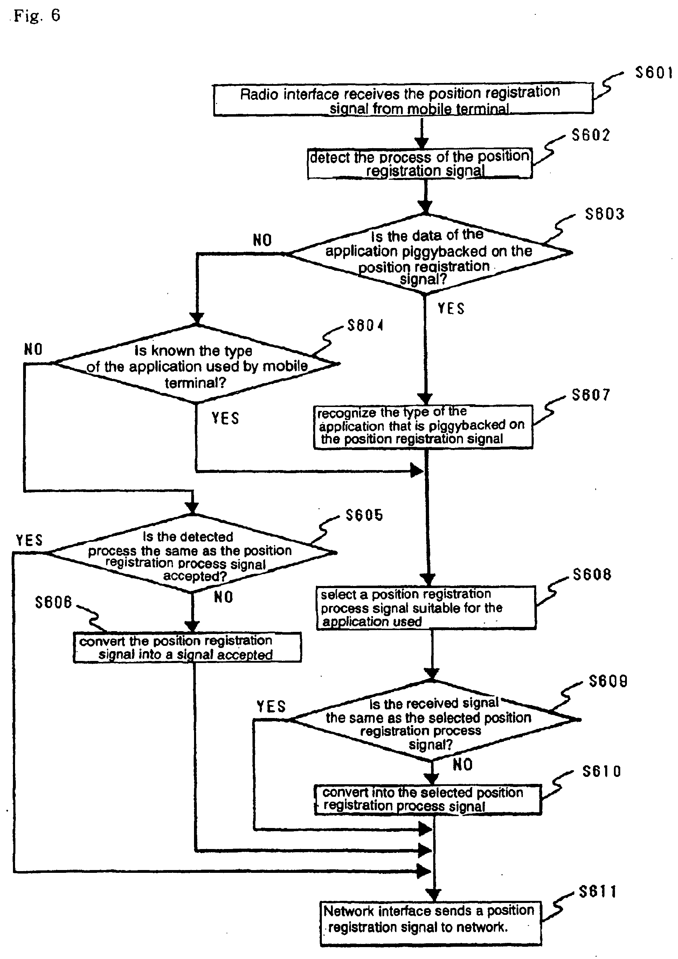

Operation of the second embodiment will be described below with reference to a flowchart shown in Fig. 6 (which illustrates a position registration process at edge node N: 330). A method of knowing the type of an application used by a mobile terminal is primarily based on application data piggybacked on a position registration signal. First, mobile terminal C: 130 that is located in the communication area of edge node N: 330 sends a position registration signal to network M: 203. At this time, mobile terminal C: 130 sends data used by the application piggyback in association with the position registrations signal to edge node N: 330. The signal is compatible with the position registration process depending on the mobile terminal.

Edge node N: 330 receives the position registration signal (S601), and detects the process of the position registration signal with position registration process determining unit 304A (S602). Then, position registration process selector 305A determines whether the data of the application is piggybacked on the position registration signal or not (S603). Since the data of the application is piggybacked on the position registration signal (S603: YES), position registration process selector 305A recognizes the type of the application from the data of the application that is piggybacked on the position registration signal (S607). Depending on the type of the application used by mobile terminal C: 130 (as a basis for the judgment), position registration process selector 305A selects a position registration process suitable for the application (S608).

In the present embodiment, position registration process selector 305A determines and selects which of position registration processes 403, 404 is to be used for processing. Specifically, if the application used by mobile terminal C: 130 deals with small-capacity packet communications, then position registration process selector 305A selects position registration process 403, and if the application used by mobile terminal C: 130 deals with high-speed packet communications, then position registration process selector 305A selects position registration process 404.

It is determined whether the received position registration signal is the same as the selected position registration process signal or not (S609). If the received position registration signal is the same as a selected position registration process signal (S609: YES), then the position registration signal is sent as it is from network interface 302A (S611). If the received position registration signal is different from the selected position registration process signal (S609: NO), then the position registration signal is converted into the selected position registration process signal (S610), and the position registration signal is sent from network interface 302A to network M: 203 (S611 ).

In a W-CDMA system, for example, the registration information is sent to an HLR (not shown), which is a database for managing subscribers to the mobile communication system, and managed. Subsequently, mobile terminal C: 130 can freely perform packet communications with a desired companion mobile terminal. Communications to this mobile terminal C: 103 arrive from network M: 203 through edge node N: 330.

Edge node N: 330 according to the present embodiment is arranged to negotiate a method for edge node N: 330 to recognize the type of an application used by mobile terminal C: 130, before sending a position registration signal, in addition to the above method. In this case, edge node N: 330 shares information as to the used application with the mobile terminal before sending a position registration signal.

According to this process, edge node N: 330 receives the position registration signal (S601), and detects the process of the position registration signal with position registration process determining unit 304A (S602). Though no application data is associated with the position registration signal (S603: NO), edge node N: 330 is aware of the application used by mobile terminal C: 130 (S604: YES) beforehand, and subsequently performs processing from processing step (S608). Specifically, in the same manner as described above, edge node N: 330 selects a position registration process suitable for the application (S608) depending on the type of the application used by mobile terminal C: 130 (as a basis for the judgment), and sends the position registration signal (converts it if different from the selected position registration process (S609, S610)) from network interface 302A to network M: 203 (S611).

With respect to a mobile terminal whose application cannot be known by edge node N: 330, the answer is "NO" in processing step (S604). Therefore, edge node N: 330 determines whether the received signal is the same as the accepted position registration process signal or not (S605). If the determined result is "YES", then edge node N: 330 sends the position registration signal as it is to the network (S611). If the determined result is "NO", then edge node N: 330 converts position registration signal into the accepted position registration process signal (S606) and then sends the position registration signal to the network (S611).

In the description, the edge node has two methods of knowing an application. However, an edge node compatible with only on process may be employed though it poses a limitation on compatible mobile terminals.

According to the second embodiment, as described above, a position registration process is automatically determined to be an appropriate one in conformity with an application used by the mobile terminal. Therefore, a service based on a position registration process compatible with high-speed packet communications which pose a load on the network does not need to be provided to a mobile terminal that does not use high-speed packet communications. Consequently, the usage efficiency of the network is increased.

In the above description, a position registration process to be used is determined depending on an application used by the mobile terminal. However, a basis for determining a position registration process is not limited to such an application used by the mobile terminal. For example, an arrangement for determining a position registration process based on the moving speed of the mobile terminal is conceivable.

For changing position registration processes based on the moving speed of the mobile terminal, an edge node of a compatible arrangement is used to select a position registration process for a mobile terminal having a low moving speed, for example, depending on a data transfer system for assigning a header to the mobile terminal and carrying data to a location where the mobile terminal is presently located, and to select a position registration process for a mobile terminal having a high moving speed, depending on a data transfer system for updating a table (routing table) indicative of a data destination which an intermediary node has and carrying data.

Different position registration processes pose different loads on the network. Therefore, a position registration process may be used based on the priority level of a mobile terminal. In this case, a priority level is established for a mobile terminal, and an edge node of a compatible arrangement is used to preferentially select a position registration process which poses a load on the network for a mobile terminal having a high priority level, and to forcibly assign a position registration process which does not pose a load on the network to a mobile terminal having a low priority level. The priority level of a mobile terminal is determined beforehand depending on the amount of a communication fee that is paid by the user, for example.

### [3rd Embodiment]

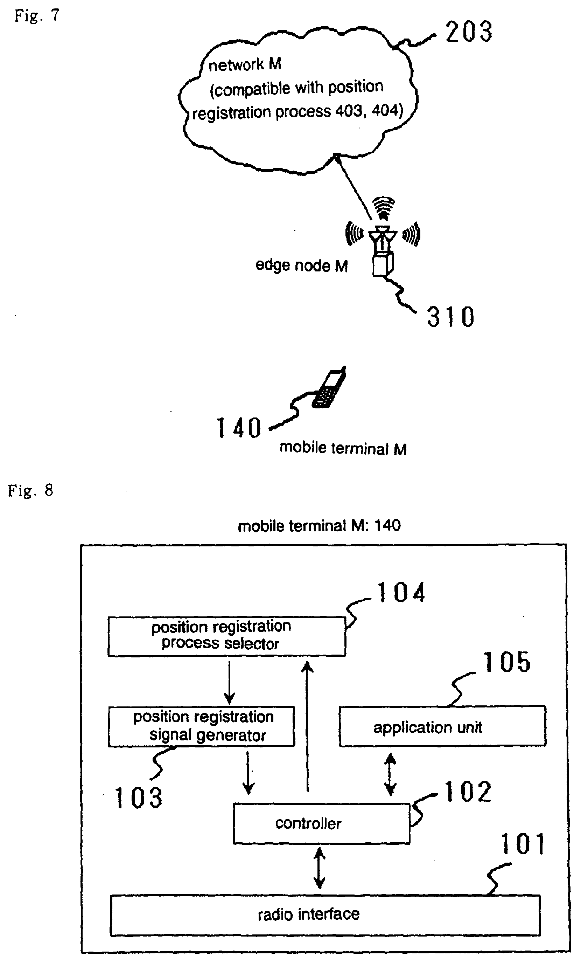

According to the second embodiment, an edge node determines a position registration process depending on an application used by the mobile terminal. However, the mobile terminal itself may determine an appropriate position registration process depending on an application used thereby. Fig. 7 is a view showing major related components of a mobile communication system according to a third embodiment of the present invention. As shown in Fig. 7, the system according to the present embodiment comprises mobile terminal M: 140, single network M: 203, and edge node M: 310.

Edge node M: 310 according to the third embodiment has an arrangement equal to those edge nodes which have been described in the first embodiment. Network M: 203 is compatible with both first position registration process 403 and second position registration process 404, as with the network which has been described in the second embodiment. The description of edge node M: 310 and network M: 203 will not be repeated below.

As shown in block form in Fig. 8, a mobile terminal M: 140 according to the third embodiment comprises radio interface 101, controller 102, position registration signal generator 103, position registration process selector 104, and application unit 105. Radio interface 101 terminates radio communications. Position registration process selector 104 selects a position registration process suitable for an application that is used among position registration processes that are supported by the network. Position registration signal generator 103 generates a position registration signal according to a position registration process that is determined by position registration process selector 104.

Application unit 105 determines a packet communication application (packet communications such as a short message service, high-speed packet communications, or the like) that is used by the mobile terminal. Applications using high-speed data communications (high-speed packet communications) include video streaming, for example, and applications using small-capacity packet communications include an instant message service.

When an application used by the mobile terminal is a short message service, for example, position registration process selector 104 selects first position registration process 403 (e.g., Mobile IP). When an application used by the mobile terminal is high-speed data communications, position registration process selector 104 selects second position registration process 404 (e.g., Cellular IP). Controller 102 controls the above components and also controls the functions of the mobile terminal.

According to the third embodiment, as described above, mobile terminal M: 140 automatically determines a position registration process in conformity with an application used by itself. Therefore, a position registration process which does not pose a load on the network is enough for the usage of an application which does not use high-speed packet communications. Consequently, the usage efficiency of the network is increased.

## Claims

1. A mobile communication system comprising a mobile terminal A compatible with at least a first position registration process, a plurality of edge nodes C connected to the mobile terminal A through a radio link and compatible with said first position registration process and a second position registration process, a network A connected to said edge nodes C and compatible with said first position registration process, and a network B connected to another said edge node C and compatible with said second position registration process, wherein
the edge node C connected to said network B is responsive to a reception of a position registration signal from said mobile terminal A for converting the position registration signal into a signal according to said second position registration process and performing a position registration of said mobile terminal A.

2. A mobile communication system comprising a mobile terminal A compatible with at least a first position registration process, a plurality of edge nodes A connected to the mobile terminal A through a radio link, a network A connected to said edge nodes A and compatible with said first position registration process, a plurality of edge nodes C connected to the mobile terminal A through a radio link and compatible with said first position registration process and a second position registration process, a communication node C connected to the edge nodes C and compatible with said first position registration process and said second position registration process, and a network B connected to said communication node C and compatible with said second position registration process, wherein
said communication node C connected to said network B is responsive to a reception of a position registration signal from said mobile terminal A for converting the position registration signal into a signal according to said second position registration process and performing a position registration of said mobile terminal A.

3. A mobile communication system according to claim 1, wherein said first position registration process comprises a position registration process of a W-CDMA system, and said second position registration process comprises Mobile IP.

4. A mobile communication system according to claim 2, wherein said first position registration process comprises a position registration process of a W-CDMA system, and said second position registration process comprises Mobile IP.

5. A mobile communication system comprising a mobile terminal C compatible with a first position registration process and a second position registration process, a plurality of edge nodes N connected to the mobile terminal C through a radio link and compatible with said first position registration process and said second position registration process, and a network M connected to said edge nodes N and compatible with said first position registration process and said second position registration process, wherein
said edge nodes N receive a position registration signal sent by said mobile terminal C and based on the first position registration process or the second position registration process, and performs a position registration of said mobile terminal C based on either the first position registration process or the second position registration process depending on a predetermined condition.

6. A mobile communication system comprising a mobile terminal C compatible with a first position registration process and a second position registration process, a plurality of edge nodes N connected to the mobile terminal C through a radio link and compatible with said first position registration process and said second position registration process, a communication node N connected to said edge nodes N and compatible with said first position registration process and said second position registration process, and a network M connected to said communication node N and compatible with said first position registration process and said second position registration process, wherein
said communication node N receives a position registration signal sent by said mobile terminal C and based on the first position registration process or the second position registration process, and performs a position registration of said mobile terminal C based on either the first position registration process or the second position registration process depending on a predetermined condition.

7. A mobile communication system comprising a mobile terminal M compatible with a first position registration process and a second position registration process, a plurality of edge nodes M connected to the mobile terminal M through a radio link and compatible with said first position registration process and said second position registration process, and a network M connected to said edge nodes M and compatible with said first position registration process and said second position registration process, wherein
said mobile terminal M sends a position registration signal based on either the first position registration process or the second position registration process depending on a predetermined condition.

8. A mobile communication system according to claim 5, wherein said predetermined condition comprises a type of an application used by the mobile terminal.

9. A mobile communication system according to claim 6, wherein said predetermined condition comprises a type of an application used by the mobile terminal.

10. A mobile communication system according to claim 7, wherein said predetermined condition comprises a type of an application used by the mobile terminal.

11. A mobile communication system according to claim 8, wherein the type of an application used by the mobile terminal is piggybacked on the position registration signal.

12. A mobile communication system according to claim 9, wherein the type of an application used by the mobile terminal is piggybacked on the position registration signal.

13. A mobile communication system according to claim 10, wherein the type of an application used by the mobile terminal is piggybacked on the position registration signal.

14. A mobile communication system according to claim 5, wherein said predetermined condition comprises a predetermined priority level of the mobile terminal.

15. A mobile communication system according to claim 6, wherein said predetermined condition comprises a predetermined priority level of the mobile terminal.

16. A mobile communication system according to claim 7, wherein said predetermined condition comprises a predetermined priority level of the mobile terminal.

17. A mobile communication system according to claim 5, wherein said predetermined condition comprises a magnitude of a moving speed which can be used by the mobile terminal.

18. A mobile communication system according to claim 6, wherein said predetermined condition comprises a magnitude of a moving speed which can be used by the mobile terminal.

19. A mobile communication system according to claim 7, wherein said predetermined condition comprises a magnitude of a moving speed which can be used by the mobile terminal.

20. A mobile communication system according to claim 5, wherein said first position registration process comprises Cellular IP, and said second position registration process comprises Mobile IP.

21. A mobile communication system according to claim 6, wherein said first position registration process comprises Cellular IP, and said second position registration process comprises Mobile IP.

22. A mobile communication system according to claim 7, wherein said first position registration process comprises Cellular IP, and said second position registration process comprises Mobile IP.

23. A mobile communication system according to claim 8, wherein said first position registration process comprises Cellular IP, and said second position registration process comprises Mobile IP.

24. A mobile communication system according to claim 11, wherein said first position registration process comprises Cellular IP, and said second position registration process comprises Mobile IP.

25. A mobile communication system according to claim 14, wherein said first position registration process comprises Cellular IP, and said second position registration process comprises Mobile IP.

26. A mobile communication system according to claim 17, wherein said first position registration process comprises Cellular IP, and said second position registration process comprises Mobile IP.

27. A mobile communication system according to claim 8, wherein Mobile IP is selected as the position registration processes if the type of an application used by the mobile terminal represents small-capacity packet communications, and Cellular IP is selected as the position registration processes if the type of an application used by the mobile terminal represents high-speed packet communications.

28. A mobile communication system according to claim 9, wherein Mobile IP is selected as the position registration processes if the type of an application used by the mobile terminal represents small-capacity packet communications, and Cellular IP is selected as the position registration processes if the type of an application used by the mobile terminal represents high-speed packet communications.

29. A mobile communication system according to claim 10, wherein Mobile IP is selected as the position registration processes if the type of an application used by the mobile terminal represents small-capacity packet communications, and Cellular IP is selected as the position registration processes if the type of an application used by the mobile terminal represents high-speed packet communications.

30. A mobile communication system according to claim 11, wherein Mobile IP is selected as the position registration processes if the type of an application used by the mobile terminal represents small-capacity packet communications, and Cellular IP is selected as the position registration processes if the type of an application used by the mobile terminal represents high-speed packet communications.

31. A mobile communication system according to claim 12, wherein Mobile IP is selected as the position registration processes if the type of an application used by the mobile terminal represents small-capacity packet communications, and Cellular IP is selected as the position registration processes if the type of an application used by the mobile terminal represents high-speed packet communications.

32. A mobile communication system according to claim 13, wherein Mobile IP is selected as the position registration processes if the type of an application used by the mobile terminal represents small-capacity packet communications, and Cellular IP is selected as the position registration processes if the type of an application used by the mobile terminal represents high-speed packet communications.
